# EUROPEAN PATENT APPLICATION

(11) **EP 4 059 888 A1**
(43) Date of publication of application: **21.09.2022**
(21) Application number: 21163253.4
(22) Date of filing: 17.03.2021
(51) Int. Cl.: C01C 1/04, C01B 3/02, C01B 3/38, F01K 25/10

(54) **PLANT FOR PRODUCING A PRODUCT, IN PARTICULAR AMMONIA**

(71) Applicant: Siemens Energy Global GmbH & Co. KG, 81739 München (DE)
(72) Inventor: Ahmad, Suhel, 47198 Duisburg (DE); Mönk, Thomas, 45964 Gladbeck (DE)

(57) **Abstract**

The invention relates to a plant (1) for producing a product, where the plant (1) comprises the following: at least one compressor (10, 15, 21, 32) which is configured for compressing a process medium and a drive (22, 23, 24, 35) which is coupled in a torque-transmitting manner to the compressor (10, 15, 21, 32) and drives the compressor (10, 15, 21, 32), wherein the drive (22, 23, 24, 35) is configured as an expander (22, 23, 24, 35) which can be operated using supercritical CO₂.

## Description

The invention relates to a plant for producing a product, where the plant comprises the following: at least one compressor which is configured for compressing a process medium and a drive which is coupled in a torque-transmitting manner to the compressor and drives the compressor.

The invention further relates to a process for producing ammonia in a plant, with a compressor being used in each case for compressing air, synthesis gas and/or ammonia.

In plants for producing a product, for example ammonia, a natural gas, for example methane, is converted into gaseous hydrogen.

The processes for producing hydrogen from hydrocarbon are referred to as steam reforming. The hydrogen reacts here with nitrogen, which is obtained from air, with the aid of a catalyst to form ammonia. This step is referred to as ammonia synthesis and can be described by the following reaction equation:

3 H₂ + N₂ → 2 NH₃ (ammonia).

About 80% of worldwide ammonia production is required in the fertilizer industry, specifically either only in the form of salt or in solution form. These are ammonium nitrate and/or ammonium sulfate.

Synthesis gas is frequently required in the production of ammonia. Synthesis gas is a gas mixture of carbon monoxide and hydrogen (CO + H₂). To produce synthesis gas, use is made of a process which is known under the name steam methane reforming (SMR). This reaction is very endothermic, and a temperature of from 700°C to 800°C therefore has to be maintained in the plant. In conventional plants, this required external heat energy is produced by a furnace.

In the conventional ammonia production process, the hydrogen gas (H₂) is obtained from the steam methane reforming (SMR) process, which is the most widespread method for producing hydrogen. The nitrogen gas (N₂) is obtained either from air or from an air fractionation plant. The hydrogen (H₂) and the nitrogen (N₂) are mixed at a temperature of 800°C and a pressure of 200 bar in an ammonia synthesis reactor. After the reaction is complete, ammonia is produced and subsequently liquefied by cryogenic distillation.

Since the ammonia process is a highly exothermic process, this leads to release of a large quantity of heat. This release of heat is used to generate steam which is used in steam turbines to drive the compressor train. The conventional steam turbines require a number of stages for liquefying the steam to water in a large condenser.

It is an object of the invention to provide a further plant and a process for producing a product.

This object is achieved by a plant for producing a product, where the plant comprises the following: at least one compressor which is configured for compressing a process medium and a drive which is coupled in a torque-transmitting manner to the compressor and drives the compressor, wherein the drive is configured as an expander which can be operated using supercritical CO₂.

The object is likewise achieved by a process for producing a product, in particular ammonia, in a plant, wherein a compressor is used in each case for compressing air, synthesis gas and/or ammonia, wherein the compressor is operated by means of an expander, wherein the expander is operated using supercritical CO₂.

It is thus proposed that steam turbines which have hitherto been used in plants for producing a product be replaced by sCO₂ expansion turbines which are operated using supercritical carbon dioxide (sCO₂).

The heat integration for supercritical carbon dioxide (sCO₂) instead of steam for this process could lead to a higher efficiency being achieved with compact components over a high temperature range of the heat source. This could lead to a smaller space requirement for the system, a higher efficiency, lower capital costs, since no condenser is required, and lower operating costs.

An advantage of the invention is that a total cost saving in respect of energy, a smaller carbon footprint, environmental advantages and equipment and also costs is possible.

The supercritical carbon dioxide (sCO₂) has many technical advantages over water since it operates within the critical phase while water requires a large amount of space because of the phase change. The maximum heat transfer takes place during the release of heat in the recuperator owing to the phase change.

Advantageous further developments are indicated in the dependent claims.

In an advantageous further development, the supercritical carbon dioxide (sCO₂) required in the plant is produced in the plant itself.

An external supply of supercritical carbon dioxide (sCO₂) to the expanders would become unnecessary as a result.

The invention is illustrated in more detail below with the aid of specific working examples with reference to drawings. The above-described properties, features and advantages of the present invention and also the way in which these are achieved will become clearer and more easily understood in connection with the following description of the working examples which are explained in more detail in connection with the drawings.

Identical components or components having the same function are denoted by the same reference numerals here.

Working examples of the invention will be described below with the aid of the drawings. These are not intended to show the working examples true-to-scale, but rather the drawing is, where useful for explanation, depicted in schematic and/or slightly distorted form. In respect of supplementations of the teachings which can be directly discerned from the drawing, reference is made to the relevant prior art.

The figures show:
- Figure:: a schematic depiction of a plant according to the invention

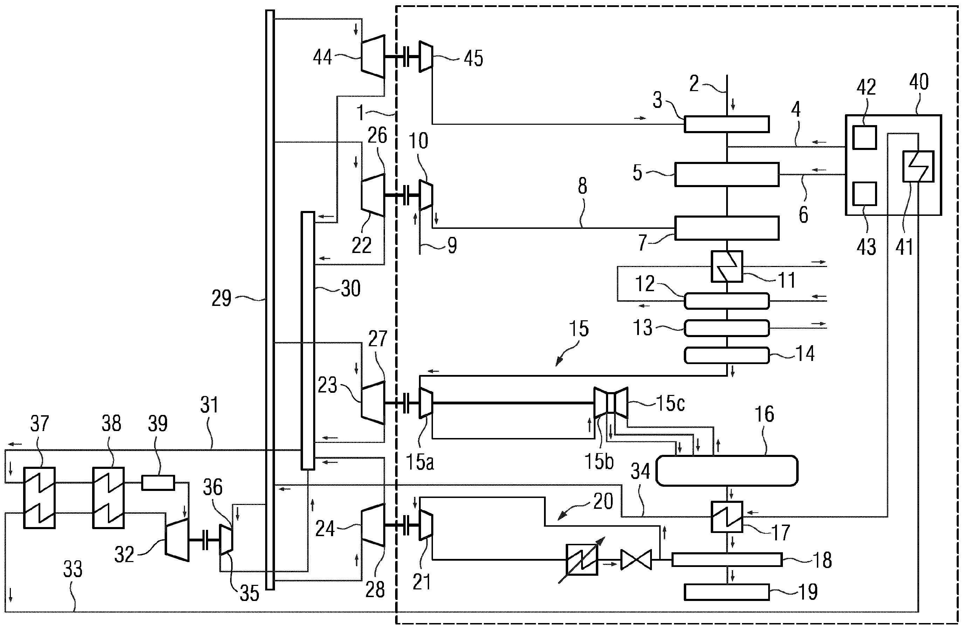

Figure 1 shows a plant 1 and a process flow diagram for the ammonia production process.

The broken line indicates a conventional plant 1 for producing ammonia.

The fundamental structure is known in the prior art. A brief overview of the individual plant constructions and process steps is given below.

Natural gas is compressed via a natural gas feed conduit 2 into a desulfurization plant 3. Downstream of the desulfurization plant 3, a process steam 4 is fed in.

A chemical reaction which can be described by the following reaction equation:

CH₄ + H₂O → CO + 3 H₂

(at 30-40 bar and 206 kJ) occurs in a primary reformer 5.

Process air 6 is fed to the primary reformer 5. The primary reformer 5 is followed by a secondary reformer 7. Compressed nitrogen (N₂) and oxygen (O₂) are fed via a conduit 8 into the secondary reformer 7.

For this purpose, air 9 is fed to a first compressor 10. The first compressor 10 has a rotatably mounted compressor rotor which is not shown in more detail and a compressor housing arranged around the compressor rotor. The first compressor 10 is configured for compressing the inflowing air 9 to a high pressure.

A pre-compressor 45 comprises a rotatably mounted compressor rotor which is not shown in more detail and a housing arranged around the compressor rotor. The pre-compressor 45 is configured for compressing a medium for desulfurization plant 3 to a high pressure.

The pre-compressor 45 is driven by a drive, namely a pre-expander as shown in figure 1.

The gas coming from the secondary reformer 7 subsequently flows through a heat exchanger 11 and two further plant components 12 and 13, which are not described in more detail here, into a methanation plant 14. The gas, which can also be referred to as synthesis gas, subsequently flows to a second compressor 15.

The second compressor 15 likewise comprises a rotatably mounted compressor rotor which is not shown in more detail and a housing arranged around the compressor rotor. The second compressor 15 is configured for compressing the synthesis gas to a high pressure.

The synthesis gas flowing out from the second compressor 15 flows into an ammonia synthesis reactor 16. A chemical reaction which can be described by the following reaction equation:

N₂ + 3H₂ + catalyst → 2 NH₃ + 92 kJ

(at 180-220 bar and a temperature of 500°C) occurs in the ammonia synthesis reactor 16.

As can be seen from the figure, the second compressor comprises a first subcompressor 15a, a second subcompressor 15b arranged fluidically downstream thereof and a third subcompressor 15c also called re-cycle compressor. The synthesis gas is firstly compressed in the first subcompressor 15a and in the second subcompressor 15b and fed to the ammonia synthesis reactor 16. Part of the reaction gas present in the ammonia synthesis reactor 16 is conveyed out from the ammonia synthesis reactor 16 into the third subcompressor 15c, compressed there and fed back into the ammonia synthesis reactor 16.

The subcompressors 15a, 15b and 15c are arranged fluidically in succession. All three subcompressors 15a, 15b, 15c are driven by a drive, namely the second expander 23.

Downstream of the ammonia synthesis reactor 16, the reactor product formed in the ammonia synthesis reactor 16 flows via a heat exchanger 17 to a cooling unit 18. The region around the heat exchanger 17 shows the ammonia refrigerant train which is configured for liquefying the ammonia.

In the cooling unit 18, the reactor product is cooled to such an extent that ammonia can subsequently be collected in a product collection vessel 19.

Part of the reactor product is conveyed from the cooling unit 18 to a compressor unit 20. The refrigerant ammonia is circulated in closed loop which provide cooling unit 18. This compressor unit 20 comprises a third compressor 21.

The third compressor 21 likewise comprises a rotatably mounted compressor rotor and a compressor housing arranged around the compressor rotor. The third compressor 21 is configured so that the reaction product flowing into the third compressor 21 is brought to a higher pressure.

The first compressor 10, the second compressor 15 and the third compressor 21 are in each case coupled in a torque-transmitting manner to an expansion turbine 22, 23, 24, which can also be referred to as expander 22, 23, 24. The expander 22, 23, 24 is operated using supercritical carbon dioxide (sCO₂). Here, supercritical carbon dioxide (sCO₂) flows via a flow inlet into the expander 22, 23, 24. The expander 22, 23, 24 has a rotatable rotor and a housing arranged around the rotor. The expander 22, 23, 24 is configured so that the energy of the supercritical carbon dioxide (sCO₂) is converted into rotational energy of the rotor.

The compressor rotors of the compressors 10, 15 and 21 are driven by means of this rotational energy.

A pre-expander 44 is coupled in a torque-transmitting manner to the pre-compressor 45.

A first expander 22 is coupled in a torque-transmitting manner to the first compressor 10.

A second expander 23 is coupled in a torque-transmitting manner to the second compressor 15.

A third expander 24 is coupled in a torque-transmitting manner to the third compressor 21.

The first expander 22, the second expander 23 and the third expander 24 are fluidically connected by a collecting manifold 25.

The first expander 22 therefore has a first flow inlet 26 for introduction of supercritical carbon dioxide (sCO₂).

The second expander 23 has a second flow inlet 27 for introduction of supercritical carbon dioxide (sCO₂).

The third expander 24 has a third flow inlet 28 for introduction of supercritical carbon dioxide (sCO₂).

The first compressor 10, second compressor 15 and third compressor 21 and fourth compressor 32 are configured for compressing a process medium.

The first compressor 10, second compressor 15 and third compressor 21 and fourth compressor 32 are in each case coupled in a torque-transmitting manner to a drive, where the drive is configured as an expander 22, 23, 24 and 35 which can be operated using supercritical CO₂.

The compressor 10, 15, 21, 32 has a rotatably mounted compressor rotor, where the expander 22, 23, 24 and 35 has a rotatably mounted drive rotor, where the compressor rotor and the drive rotor are coupled to one another in a torque-transmitting manner.

The first compressor 10 is an air compressor which is configured for compressing air.

The second compressor 15 is configured as a synthesis gas compressor which is configured for compressing synthesis gas.

The third compressor 21 is configured as an ammonia compressor which is configured for compressing ammonia.

The supercritical carbon dioxide (sCO₂) flowing out from the first expander 22, the second expander 23 and the third expander 24 is collected in a further collecting manifold 30.

From the further collecting manifold 30, supercritical carbon dioxide (sCO₂) flows via a further conduit 31 to a fourth compressor 32. From there, the supercritical carbon dioxide (sCO₂) flows via a further conduit 33 to the heat exchanger 17 and is heated there.

Downstream of the heat exchanger 17, the supercritical carbon dioxide (sCO₂) flows via a further conduit 34 to the collecting manifold 29.
A fourth expander 35 is coupled in a torque-transmitting manner to the fourth compressor 32. A flow inlet 36 of the fourth expander 35 is fluidically coupled to the collecting manifold 29.

Before the supercritical carbon dioxide (sCO₂) flows to the heat exchanger 17 it flows to a further heat exchanger 41 which is located within a furnace 40. The furnace 40 comprises a convective zone 42 and a radiative zone 43. Further, the furnace is fluidically connected with the process steam 4 and process air 6 as shown in figure 1.

Before the supercritical carbon dioxide (sCO₂) flows into the fourth compressor 32, it flows through a first heat exchanger 37 and a second heat exchanger 38 and also a further cooling unit 39.

The drive for the compressors 10, 15, 21, 32 is in each case an sCO₂ expansion turbine 22, 23, 24 and 35 instead of a steam turbine.

The compressed supercritical carbon dioxide (sCO₂) is heated by the ammonia synthesis reactor 16 and depressurized in expansion turbines 22, 23, 24 and 35 which drive the compressors 10, 15, 21, 32.

The low-pressure supercritical carbon dioxide (sCO₂) is collected in the further collecting manifold 30 and compressed again.

The most important process steps are as follows:
In the conventional ammonia plant, the hydrogen gas is produced by a steam reforming process in which the natural feed gas is firstly purified and compressed to 30-40 bar and then heated to 800°C in a furnace.
The mixture is then preheated and conveyed through catalyst-filled tubes into the primary reformer 5.

The major part of the natural gas is reformed to give hydrogen, carbon monoxide and carbon dioxide (H2, CO, CO₂). In the secondary reformer 7, the air is introduced as nitrogen source. The oxygen burns and further reforming takes place in a further catalyst bed, leaving a mixture of nitrogen, hydrogen, carbon oxides and other gases.

In the shift reactor, the carbon monoxide is converted into carbon dioxide with the assistance of catalyst beds at various temperatures (ca. 250-300°C).

The carbon dioxide is separated off and passed onto the urea plant.

The ammonia synthesis gas, which is a mixture of hydrogen and nitrogen (H2 and N2), is compressed at 220 bar in the synthesis gas compressor. After leaving the compressor, the mixture flows through the ammonia synthesis reactor 16 where ammonia having a hydrogen to nitrogen ratio of three:one is produced.

However, not all of the hydrogen and nitrogen is converted into ammonia. The unconverted hydrogen and nitrogen are separated off from the ammonia in the separator and recirculated to the recycle synthesis gas compressor. Ammonia is liquefied by means of the ammonia refrigerant circuit in a cryogenic process and collected as cooled liquid in tanks.

Although the invention has been illustrated and described in detail by the preferred working example, the invention is not restricted by the examples disclosed and other variations can be derived therefrom by a person skilled in the art without going outside the scope of protection of the invention.

## Claims

1. A plant (1) for producing a product,
where the plant (1) comprises the following:
at least one compressor (10, 15, 21, 32) which is configured for compressing a process medium
and a drive (22, 23, 24, 35) which is coupled in a torque-transmitting manner to the compressor (10, 15, 21, 32) and drives the compressor (10, 15, 21, 32),
**characterized in that**
the drive (22, 23, 24, 35) is configured as an expander (22, 23, 24, 35) which can be operated using supercritical CO₂.

2. The plant (1) as claimed in claim 1,
wherein the compressor (10, 15, 21, 32) has a rotatably mounted compressor rotor and
the expander (22, 23, 24, 35) has a rotatably mounted drive rotor,
wherein the compressor rotor and the drive rotor are coupled to one another in a torque-transmitting manner.

3. The plant (1) as claimed in claim 1 or 2,
wherein the plant (1) is configured for producing ammonia.

4. The plant (1) as claimed in claim 1, 2 or 3,
having an air compressor (10) which is configured for compressing air,
wherein the air compressor (10) is coupled in a torque-transmitting manner to a first expander (22) operated using supercritical CO₂.

5. The plant (1) as claimed in any of the preceding claims, having a synthesis gas compressor (15) which is configured for compressing synthesis gas,
wherein the synthesis gas compressor (15) is coupled in a torque-transmitting manner to a second expander (23) operated using supercritical CO₂.

6. The plant (1) as claimed in claim 5,
wherein the synthesis gas compressor (15) is fluidically connected to a secondary reformer (7).

7. The plant (1) as claimed in claim 6,
wherein the secondary reformer (7) is configured for producing a synthesis gas, in particular a gas mixture of nitrogen (N₂) and hydrogen (H₂) .

8. The plant (1) as claimed in any of the preceding claims, having an ammonia compressor (21) which is configured for compressing ammonia,
wherein the ammonia compressor (21) is coupled in a torque-transmitting manner to a third expander (24) operated using supercritical CO₂.

9. The plant (1) as claimed in claim 8,
wherein the ammonia compressor (21) is fluidically connected to a cooling unit (18),
wherein the cooling unit (18) is configured for cooling ammonia.

10. The plant (1) as claimed in claim 9,
wherein the cooling unit (18) is fluidically connected to an ammonia synthesis reactor (16).

11. The plant (1) as claimed in any of the preceding claims, having a collecting manifold (29) which is configured for storing supercritical CO₂,
wherein the first expander (22) has a first flow inlet (26) for inflow of supercritical CO₂ into the first expander (22), wherein the second expander (23) has a second flow inlet (27) for inflow of supercritical CO₂ into the second expander (23),
wherein the third expander (24) has a third flow inlet (28) for inflow of supercritical CO₂ into the third expander (24), wherein the first flow inlet (26), the second flow inlet (27) and the third flow inlet (28) are fluidically connected to the collecting manifold (29).

12. The plant (1) as claimed in claim 10 or 11,
having a heat exchanger (17) which is fluidically connected to the ammonia synthesis reactor (16), wherein the heat exchanger (17) is configured for warming supercritical CO₂.

13. The plant (1) as claimed in claim 12,
wherein the collecting manifold (29) is fluidically connected to the heat exchanger (17).

14. The plant (1) as claimed in any of the preceding claims, having a further collecting manifold (30) which is fluidically connected to the outlet of an expander (22, 23, 24, 35), having an sCO₂ compressor (32) which is configured for compressing supercritical CO₂,
wherein the sCO₂ compressor (32) is coupled in a torque-transmitting manner to a fourth expander (35), wherein a fourth flow inlet of the fourth expander (35) is fluidically connected to the collecting manifold (29).

15. The plant (1) as claimed in claim 14,
wherein a flow inlet of the sCO₂ compressor (32) is fluidically connected by a further conduit (31) to the further collecting manifold (30).

16. The plant (1) as claimed in claim 15,
wherein a heat exchanger (37, 38) is arranged in the further feed conduit (31).

17. A process for producing a product, in particular ammonia, in a plant (1),
wherein a compressor (10, 15, 21, 32) is used in each case for compressing air, synthesis gas and/or ammonia,
wherein the compressor (10, 15, 21, 32) is operated by means of an expander (22, 23, 24, 35),
wherein the expander (22, 23, 24, 35) is operated using supercritical CO₂.

18. The process as claimed in claim 17,
wherein the supercritical CO₂ required for the expander (22, 23, 24, 35) is produced in the plant (1) itself.
